# EUROPÄISCHE PATENTSCHRIFT

(11) **EP 0 712 433 B1**
(45) Veröffentlichungstag und Bekanntmachung des Hinweises auf die Patenterteilung: **27.12.1996**
(21) Anmeldenummer: 94921593.3
(22) Anmeldetag: 25.07.1994
(51) Int. Cl.: C10B 1/10, F23G 5/033, F23G 5/44, F27B 7/32, B65G 33/24

(54) **ABFALL-TRANSPORTEINRICHTUNG**
WASTE CONVEYOR
CONVOYEUR DE DECHETS

(30) Priorität: 06.08.1993 DE 4326483
(43) Veröffentlichungstag der Anmeldung: 22.05.1996
(73) Patentinhaber: SIEMENS AKTIENGESELLSCHAFT, 80333 München (DE)
(72) Erfinder: TRATZ, Herbert, D-91242 Ottensoos (DE); MAY, Karl, D-61118 Bad Vilbel (DE); HERM, Hartmut, D-63303 Dreieich (DE); UNVERZAGT, Karlheinz, D-63065 Offenbach am Main (DE)
(86) Internationale Anmeldenummer: DE9400859
(87) Internationale Veröffentlichungsnummer: WO9504793

(56) Entgegenhaltungen:
- EP-A- 0 302 310
- DE-B- 1 262 173
- FR-A- 2 404 520
- US-A- 2 542 476
- US-A- 3 337 026

## Beschreibung

Die Erfindung bezieht sich auf eine Abfall-Transporteinrichtung, bei der ein Zuführschacht an einen Transportkanal angeschlossen ist, in dessen Längsrichtung eine Schneckenwendel angeordnet ist.

Die Abfall-Transporteinrichtung wird zur thermischen Abfallentsorgung eingesetzt, insbesondere nach dem Schwelbrenn-Verfahren.

Auf dem Gebiet der Abfallbeseitigung ist das sogenannte Schwelbrenn-Verfahren bekannt geworden. Das Verfahren und eine danach arbeitende Anlage zur thermischen Abfallentsorgung sind beispielsweise in der EP-A-0 302 310 sowie in der DE-A-38 30 153 beschrieben. Die Anlage zur thermischen Abfallentsorgung nach dem Schwelbrenn-Verfahren enthält als wesentliche Komponenten einen Pyrolysereaktor und eine Hochtemperatur-Brennkammer. Der Pyrolysereaktor setzt den über eine Abfall-Transporteinrichtung der eingangs genannten Art aufgegebenen Abfall in Schwelgas und Pyrolysereststoff um. Das Schwelgas und der Pyrolysereststoff werden sodann nach geeigneter Aufbereitung dem Brenner der Hochtemperatur-Brennkammer zugeführt. Hier entsteht schmelzflüssige Schlacke, die über einen Abzug entnehmbar ist und die nach Abkühlung in verglaster Form vorliegt. Das entstehende Rauchgas wird über eine Rauchgasleitung einem Kamin als Auslaß zugeführt. In diese Rauchgasleitung sind insbesondere ein Abhitzedampferzeuger als Kühleinrichtung, eine Staubfilteranlage und eine Rauchgasreinigungsanlage eingebaut. Weiterhin befindet sich in der Rauchgasleitung ein Gasverdichter, der direkt am Ausgang der Rauchgasreinigungsanlage angeordnet und als Saugzuggebläse ausgebildet sein kann. Der eingebaute Gasverdichter dient zum Gastransport durch die Anlage und insbesondere zur Aufrechterhaltung eines - wenn auch geringen - Unterdrucks in der Pyrolysetrommel. Durch diesen Unterdruck wird verhindert, daß Schwelgas durch die Ringdichtungen der Pyrolysetrommel nach außen in die Umgebung austritt.

Es hat sich gezeigt, daß bei einer Schwelbrenn-Anlage die Abfall-Transporteinrichtung blockiert oder gestört werden kann, wenn vom Zuführschacht zu große Abfallpartikel in die Schneckenwendel hineinfallen. In der Regel wird der Abfall vorzerkleinert; jedoch kann es vorkommen, daß der Wendelabschnitt, der sich gerade unter dem Zuführschacht dreht, bis zu einem gewissen Füllstand mit Abfall gefüllt ist, so daß ein hineinfallendes Abfallpartikel, beispielsweise ein Holzstück, nicht weiter hineinrutschen kann und an der Ecke des Zuführschachts verklemmt. Außerdem besteht die Gefahr, daß dann die Ecke des Zuführschachts und/oder der Rand der Schneckenwendel infolge der Klemmwirkung beschädigt wird.

Gegenstand der vorliegenden Patentanmeldung ist eine Abfall-Transporteinrichtung, bei der ein Zuführschacht an einem Transportkanal angeschlossen ist, in dessen Längsrichtung eine Schneckenwendel mit einer Welle angeordnet ist.

Eine solche Transporteinrichtung, die zur Förderung von Müll dient, ist aus der DE-B-1 262 173 bekannt. Diese bekannte Einrichtung enthält Vorrichtungen zum Zerkleinem von langfaserigem Müll. Dazu gehören am Umfang der Schneckenwendel gleichmäßig verteilte messerartige Verzahnungen, die senkrecht zur Schneckenwelle ausgerichtete Schneidkanten aufweisen. Außerdem sind feststehende Schneidbalken vorhanden, die parallel zur Schneckenwelle verlaufen und am Gehäuse der Transporteinrichtung befestigt sind.

Aufgabe der Erfindung ist es, eine Abfall-Transporteinrichtung der eingangs genannten Art derart auszubilden, daß ein stör- und blockadefreier Betrieb gewährleistet ist, und zwar auch dann, wenn ein relativ großes Abfallpartikel nicht voll in die Schneckenwendel hineinfällt. Großvolumige Bestandteile des transportierten Abfalls sollen mit einfacher Mitteln zerteilt werden.

Diese Aufgabe wird erfindungsgemäß dadurch gelöst, daß der Rand eines Teilstücks der Schneckenwendel (4) mit einem ersten bezüglich der Achse der Welle (2) gekrümmten Schneidmetallstück (20) versehen ist, daß ein Teilstück des Transportkanals (10) mit einem zweiten bezüglich der Achse der Welle (2) gekrümmten Schneidmetallstück (22) versehen ist, dessen Krümmungsradius größer als der Krümmungsradius des ersten Schneidmetallstücks (20) ist, und daß die beiden Schneidmetallstücke (20, 22) bei einer bestimmten Drehstellung der Schneckenwendel (4) etwa konzentrisch zur Welle (2) nebeneinander angeordnet sind.

Dieses erste Schneidmetallstück dient dazu, das hineingefallene Abfallpartikel, beispielsweise an der Ecke des Zuführschachts, abzuscheren oder abzuschneiden. Dieses Schneidmetallstück kann somit auch als Schneidkante oder Schneideinrichtung bezeichnet werden.

Es ist weiter vorgesehen, daß ein Teilstück des Transportkanals mit einem zweiten Schneidmetallstück versehen ist. Die beiden Schneidmetallstücke wirken dann beim Drehen der Welle der Schneckenwendel wie eine Schere, das heißt sie scheren oder brechen das hineingefallene Abfallpartikel ab. Auf diese Weise ist ein blockadefreier Betrieb gewährleistet.

Um eine hohe Schneidwirkung und Standzeit zu erzielen, bestehen die Schneidmetallstücke bevorzugt aus einem verschleißfesten Stahl. Sie können dabei die Form eines Flach- oder Profileisens haben.

Weitere vorteilhafte Ausgestaltungen sind in den Unteransprüchen gekennzeichnet.

Ausführungsbeispiele der Erfindung werden im folgenden anhand von zwei Figuren näher erläutert. Es zeigen:
Figur 1 eine Abfall-Transporteinrichtung in schematischer Darstellung im Seitenschnitt und
Figur 2 einen Blick in Richtung II-II entlang der Schneckenwendel mit Schneideinrichtung.

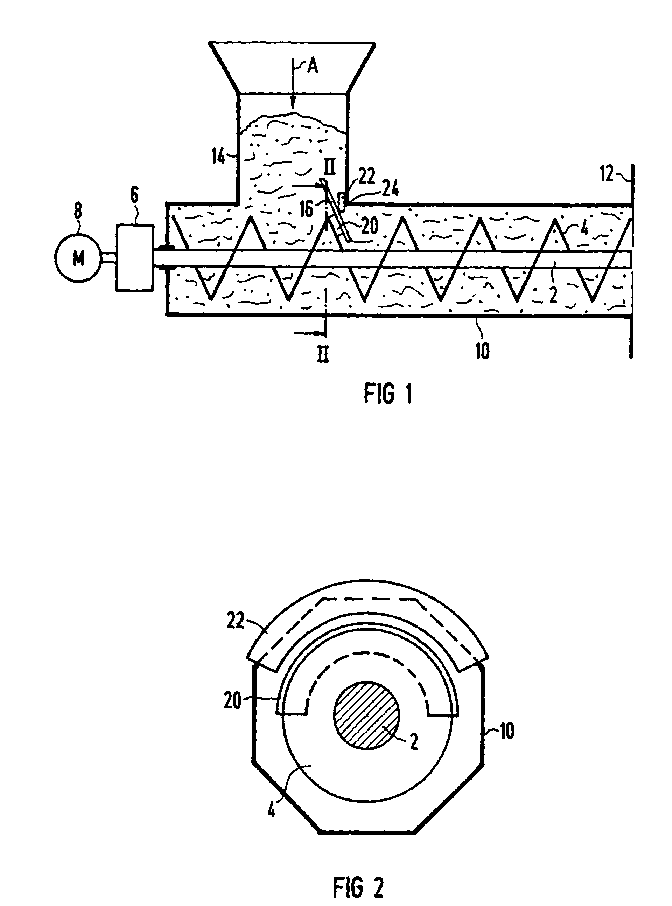

Nach Figur 1 wird die Welle 2 der Schnecke oder Schneckenwendel 4 einer Abfall-Transporteinrichtung über ein Getriebe 6 von einem Motor 8 angetrieben. Die Schnecke 4 ist in Längsrichtung eines ortsfesten Trogs, Schneckentrogs oder Transportkanals 10 angeordnet. Dieser Transportkanal 10 ist im vorliegenden Beispiel speziell an den Pyrolysereaktor 12 einer Schwelbrenn-Anlage angeschlossen. In den Transportkanal 10 führt seitlich ein Zuführschacht 14 für Abfall A. Der Transportkanal 10 ist bevorzugt n-eckig ausgebildet, wobei n eine Zahl gleich oder größer als vier ist. Im vorliegenden Fall ist der Transportkanal 10, wie sich insbesondere aus Figur 2 ergibt, acht-eckig ausgebildet.

Bei Betrieb des Motors 8 wird der Abfall A durch die Schnecke 4 von links nach rechts zum Pyrolysereaktor 12 transportiert. In Figur 1 ist angenommen, daß ein relativ großes Abfallpartikel 16 sich an der rechten Ecke des Zuführschachts 14 zwischen diesem und der Schnecke 4 verklemmt hat. Um dieses Abfallpartikel 16 durch die Drehung der Welle 2 abzuscheren oder abzuschneiden, sind ein erstes und ein zweites Schneidmetallstück 20 bzw. 22 vorgesehen. Diese beiden Schneidmetallstücke 20, 22 sind, jedenfalls bei einer gewissen Drehstellung der Welle 2, nebeneinander angeordnet.

Aus Figur 1 und 2 ergibt sich, daß das erste Schneidmetallstück 20 am Rand eines Teilstücks der Schnecke 4 angeordnet ist. Es besteht aus einem Flachmetall-Streifen oder kurz Flacheisen, das um ca. 180° bezüglich der Welle 2 gekrümmt ist. Das erste Schneidmetallstück 20 steht etwas über den Rand der Schnecke 4 über. Es befindet sich - in Transportrichtung gesehen - in der Nähe der hinteren Ecke 24 zwischen dem Zuführschacht 14 und dem Transportkanal 10.

Das zweite Schneidmetallstück 22 ist an einem Teilstück des Transportkanals 10 angeordnet. Speziell befindet es sich hier an der rechten inneren Ecke 24 des Zuführschachts 14. Auch dieses zweite Schneidmetallstück 22 ist als Flacheisen ausgebildet. Um einen dauerhaften Betrieb zu gewährleisten, sind beide Schneidmetallstücke 20, 22 aus einem Stahl hoher Festigkeit gefertigt. Auch das Flacheisen 22 ist gekrümmt. Es hat einen etwas größeren Krümmungsradius als das erstgenannte Flacheisen 20. Auch das zweite Schneidmetallstück 22 ist um ca. 180° bezüglich der Achse 2 der Schnecke 4 gekrümmt. Aus Figur 2 ergibt sich, daß die beiden Schneidmetallstücke 20, 22 so bezüglich der Achse 2 der Schnecke 4 gekrümmt sind, daß das erste Schneidmetallstück 20 bei Betrieb der Schnecke 4 etwa parallel und eng am zweiten Schneidmetallstück 22 vorbeiläuft. Damit wird die Wirkung einer Schere erzielt. Abfallpartikel 16, insbesondere Holz- und Kunststoff-Stücke, werden durch die beiden Schneidmetallstücke 20, 22 an der Ecke 24 des Zuführschachts 14 glatt durchgeschnitten. Somit kann es nicht zu einer Blockade der Transporteinrichtung kommen.

## Patentansprüche

1. Abfall-Transporteinrichtung, bei der ein Zuführschacht (14) an einen Transportkanal (10) angeschlossen ist, in dessen Längsrichtung eine Schneckenwendel (4) mit einer Welle (2) angeordnet ist,
**dadurch gekennzeichnet**, daß der Rand eines Teilstücks der Schneckenwendel (4) mit einem ersten bezüglich der Achse der Welle (2) gekrümmten Schneidmetallstück (20) versehen ist, daß ein Teilstück des Transportkanals (10) mit einem zweiten bezüglich der Achse der Welle (2) gekrümmten Schneidmetallstück (22) versehen ist, dessen Krümmungsradius großer als der Krümmungsradius des ersten Schneidmetallstücks (20) ist, und daß die beiden Schneidmetallstücke (20, 22) bei einer bestimmten Drehstellung der Schneckenwendel (4) etwa konzentrisch zur Welle (2) nebeneinander angeordnet sind.

2. Abfall-Transporteinrichtung nach Anspruch 1,
**dadurch gekennzeichnet**, daß das Schneidmetallstück (20, 22) ein Flacheisen oder Profileisen ist.

3. Abfall-Transporteinrichtung nach einem der Ansprüche 1 oder 2,
**dadurch gekennzeichnet**, daß das Schneidmetallstück (20, 22) aus verschleißfestem Stahl besteht.

4. Abfall-Transporteinrichtung nach einem der Ansprüche 1 bis 3,
**dadurch gekennzeichnet**, daß das zweite Schneidmetallstück (22) im - in Transportrichtung gesehen - hinteren Eckbereich (24) zwischen dem Zuführschacht (14) und dem Transportkanal (10) angeordnet ist.

5. Abfall-Transporteinrichtung nach einem der Ansprüche 1 bis 4,
**dadurch gekennzeichnet**, daß der Transportkanal (10) n-eckig ausgebildet ist, wobei n eine Zahl größer oder gleich vier ist.

6. Abfall-Transporteinrichtung nach einem der Ansprüche 1 bis 5,
**dadurch gekennzeichnet**, daß das erste und/oder das zweite Schneidmetallstück (20, 22) etwa über 180° bezüglich der Achse (2) der Schnecke (4) gekrümmt ist.

7. Abfall-Transporteinrichtung nach einem der Ansprüche 1 bis 6,
**dadurch gekennzeichnet**, daß der Transportkanal (10) an einen Pyrolysereaktor (12) angeschlossen ist.

## Claims

1. Waste-transporting device, in which a feed chute (14) is connected to a transport channel (10), in the longitudinal direction of which is arranged a worm spiral (4) having a shaft (2), characterised in that the edge of a portion of the worm spiral (4) is provided with a first metal cutting piece (20) which is curved in relation to the axis of the shaft (2), in that a portion of the transport channel (10) is provided with a second metal cutting piece (22) which is curved in relation to the axis of the shaft (2), the radius of curvature of which second metal cutting piece is greater than the radius of curvature of the first metal cutting piece (20), and in that at a certain rotary position of the worm spiral (4), the two metal cutting pieces (20, 22) are arranged next to each other substantially concentrically with respect to the shaft (2).

2. Waste-transporting device according to claim 1, characterised in that the metal cutting piece (20, 22) is a flat bar or a profiled bar.

3. Waste-transporting device according to one of the claims 1 or 2, characterised in that the metal cutting piece (20, 22) consists of wear-resistant steel.

4. Waste-transporting device according to one of the claims 1 to 3, characterised in that the second metal cutting piece (22) is arranged - seen in terms of the direction of transportation - in the far corner region (24) between the feed chute (14) and the transport channel (10).

5. Waste-transporting device according to one of the claims 1 to 4, characterised in that the transport channel (10) is constructed so as to be n-cornered, with n being a number greater than or equal to four.

6. Waste-transporting device according to one of the claims 1 to 5, characterised in that the first metal cutting piece (20) and/or the second metal cutting piece (22) is curved over approximately 180° in relation to the axis (2) of the worm (4).

7. Waste-transporting device according to one of the claims 1 to 6, characterised in that the transport channel (10) is connected to a pyrolysis reactor (12).

## Revendications

1. Dispositif de transport de déchets dans lequel une trémie d'amenée (14) communique avec un canal de transport (10), une hélice à vis sans fin (4) comportant un arbre (2) étant disposée dans la direction longitudinale de ce dernier,
caractérisé par le fait que le bord d'une partie de l'hélice à vis sans fin (4) est muni d'un premier élément métallique tranchant (20) qui est cintré par rapport à l'axe de l'arbre (2), qu'une partie du canal de transport (10) est munie d'un deuxième élément métallique tranchant (22), qui est cintré par rapport à l'axe de l'arbre (2), et dont le rayon de courbure est supérieur au rayon de courbure du premier élément métallique tranchant (20), et que dans une certaine position en rotation de l'hélice à vis sans fin (4), les deux éléments métalliques tranchants (20, 22) sont disposés l'un à côté de l'autre à peu près concentriquement à l'arbre (2).

2. Dispositif de transport de déchets selon la revendication 1,
caractérisé par le fait que l'élément métallique tranchant (20, 22) est un fer plat ou un fer profilé.

3. Dispositif de transport de déchets selon l'une des revendications 1 ou 2,
caractérisé par le fait que l'élément métallique tranchant (20, 22) est en acier anti-usure.

4. Dispositif de transport de déchets selon l'une quelconque des revendications 1 à 3,
caractérisé par le fait que - vu dans le sens du transport - le deuxième élément métallique tranchant (22) est disposé dans la zone du coin arrière (24) entre la trémie d'amenée (14) et le canal de transport (10).

5. Dispositif de transport de déchets selon l'une quelconque des revendications 1 à 4,
caractérisé par le fait que le canal de transport (10) est réalisé avec n angles, n étant un nombre supérieur ou égal à quatre.

6. Dispositif de transport de déchets selon l'une quelconque des revendications 1 à 5,
caractérisé par le fait que le premier et/ou le deuxième éléments métalliques tranchants (20, 22) sont cintrés sur environ 180° par rapport à l'axe (2) de la vis sans fin (4).

7. Dispositif de transport de déchets selon l'une quelconque des revendications 1 à 6,
caractérisé par le fait que le canal de transport (10) communique avec un réacteur à pyrolyse (12).
